# DEMANDE DE BREVET EUROPEEN

(11) **EP 2 540 680 A1**
(43) Date de publication de la demande: **02.01.2013**
(21) Numéro de dépôt: 12447011.3
(22) Date de dépôt: 27.06.2012
(51) Int. Cl.: C03C 17/00, C03C 17/34, F24J 2/50, H01L 31/048

(54) **Support super hydrophobe et panneau photovoltaïque comprenant un tel support**

(30) Priorité: 01.07.2011 BE 201100408
(71) Demandeur: Etablissements Detandt - Simon, 7011 Ghlin (BE)
(72) Inventeur: De Coninck, Joël, 7022 Mesvin (BE); Duvivier, Damien, 6120 Nalinnes (BE); Bourdon, Benoît, 7608 Wiers (BE)
(74) Mandataire: Powis de Tenbossche, Roland

(57) **Abrégé**

Support (1) contenant du silicium, pour lequel une face extérieure est une couche extérieure superhydrophobe (6) formée sensiblement par une mono couche extérieure de billes (5) de 70nm à 300nm déposée sur une couche du support ou sur une couche primaire (4) choisie parmi :
(a) une couche primaire présentant un facteur de rugosité de Wenzel compris entre 1,02 et 1,1, et
(b) une mono couche interne de billes présentant une granulométrie moyenne optique en nombre supérieure à 30nm, mais d'au moins 10nm inférieure à la granulométrie moyenne optique en nombre des billes de la couche extérieure.

## Description

L'invention a pour objet un support contenant du silicium, ledit support présentant au moins une face traitée avec un composé silane et/ou siloxane avec un groupe organique hydrophobe, avantageusement un composé fluorosilane et/ou fluorosiloxane pour former une couche extérieure super hydrophobe, avec interposition éventuelle d'une ou plusieurs couches primaires, cette couche extérieure présentant en outre une excellente résistance à l'écrasement et/ou abrasion.

### Brève description de l'invention

L'invention a en particulier pour objet un support contenant du silicium, ledit support présentant au moins une face traitée avec un composé silane et/ou siloxane avec un groupe organique hydrophobe, avantageusement un composé fluorosilane et/ou fluorosiloxane pour former une couche extérieure super hydrophobe, avec interposition éventuelle d'une ou plusieurs couches primaires.

La couche extérieure superhydrophobe est formée, selon l'invention, sensiblement par une mono couche de billes (avantageusement sensiblement sphériques) traitées au moins partiellement par un composé silane et/ou siloxane avec un groupe organique hydrophobe, avantageusement un composé fluorosilane et/ou fluorosiloxane, ladite couche présentant une teneur d'au moins 50% en poids, avantageusement d'au moins 75% en poids, spécifiquement de plus de 90% en poids, de préférence plus de 95% en poids, voire plus particulièrement plus de 99% en poids d'oxyde de silicium, les billes de ladite couche présentant les caractéristiques suivantes :
- granulométrie moyenne optique en nombre ou diamètre moyen optique en nombre comprise entre 70nm et 300nm,
- teneur optique en particules de taille inférieure à 20nm de moins de 20% en nombre par rapport au nombre total des particules de la monocouche visibles sur sa face opposée à celle tournée vers le support,
- billes sont reliées entre elles par un liant adapté pour accrocher les billes à la face du support ou à une couche primaire du support, ledit liant étant en outre adapté pour former et/ou conserver un réseau de pores et/ou de crevasses entre les billes.

Ladite couche extérieure est déposée sur une couche du support ou sur une couche primaire choisie parmi :
(a) une couche primaire présentant un facteur de rugosité de Wenzel mesuré par image AFM (Atomic Force Microscopy) de taille de 5µm sur 5µm compris entre 1,02 et 1,1, avantageusement entre 1,03 et 1,07, et
(b) une mono couche interne de billes présentant une teneur d'au moins 50% en poids, avantageusement d'au moins 75% en poids, spécifiquement de plus de 90% en poids, de préférence plus de 95% en poids, voire plus particulièrement plus de 99% en poids d'oxyde de silicium, les billes de ladite couche interne présentant les caractéristiques suivantes :
   - une granulométrie moyenne optique en nombre supérieure à 30nm, mais d'au moins 10nm inférieure à la granulométrie moyenne optique en nombre des billes de la couche extérieure, ladite mono couche interne présentant une teneur en particules de taille inférieure à 20nm de moins de 20%, avantageusement de moins de 10% en nombre par rapport au nombre total des particules de la mono couche interne.

De préférence, la couche de support présente un facteur de rugosité de Wenzel (Wenzel roughness factor ) défini comme le rapport entre la surface réelle et la surface apparente ( ratio between the real surface area and the apparent surface area) supérieur à 1, avantageusement supérieur à 1,1, mesuré par analyse d'image AFM de section 5µm sur 5µm.

Le facteur de rugosité de Wenzel d'une surface est avantageusement un facteur moyen, à savoir la moyenne de facteurs de rugosité de Wenzel calculée pour au moins trois sections différentes de surface de 5µm sur 5µm, en particulier sur au moins cinq sections différentes de 5µm sur 5µm pour la face pour laquelle la rugosité doit être déterminée.

Dans le présent mémoire, on entend par surface super hydrophobe, une surface pour laquelle, en position horizontale, une goutte d'eau de 50µl forme un angle de contact statique de recul (receding static water contact angle) de plus de 135°, avantageusement plus de 140°, de préférence supérieur à 145°, en particulier de 145° à 160°, et/ou (mais avantageusement et ) un angle de contact statique d'avancement (advancing static water contact angle) de plus de 135°, avantageusement plus de 140°, de préférence supérieur à 145°, en particulier de 145° à 160°. Ces angles sont avantageusement mesurées par un appareil "Drop Shape Analyser Krüss" de la Firme Krüss, Allemagne.

Les surfaces planes super hydrophobiques présentent avantageusement un angle de glissement d'une goutte d'eau de 50µl (water roll-off angle) de moins de 10°, de préférence de moins de 6°.

Dans le présent mémoire, on entend par "silane ou siloxane avec un groupe organique hydrophobe" des composés comprenant au moins un atome de silicium (par exemple contenant plusieurs atomes de silicium reliés deux à deux par un atome d'oxygène) relié à au moins un groupe réactif apte à réagir avec une molécule de SiO₂, éventuellement hydroxylée (présence de fonction(s) OH), et relié à au moins un groupe organique comprenant avantageusement de 3 à 15 atomes de carbone, ledit groupe organique présentant des caractéristiques ou des fonctions hydrophobes. Ledit groupe organique est est en particulier un groupe hydrocarboné, par exemple alkyle, compreant plus de 3 atomes de fluor, en particulier de 5 à 30 atomes de fluor. Le groupe organique est en particulier un groupe alkyle dont au moins les deux atomes de carbone les plus éloignés de l'atome de silicium portent uniquement des atomes de fluor.
Des composés préférés sont des composés de formule : (R¹)₃SiR²
avec R¹: Cl, OCH₃ ou OC₂H₅
R² : - (CH₂)ₓ - (CF₂)_{y} - CF₃
avec x : 1 ou 2 ou 3 et y : un entier compris entre 5 et 15, en particulier 5, 7 ou 9.

L'invention trouve en particulier une application dans les éléments capteurs ou collecteurs d'énergie solaire, en particulier d'éléments et/ou panneaux photovoltaïques, en particulier pour améliorer leur rendement, d'une part en réduisant la réflectance, et d'autre part en évitant que des salissures n'adhèrent fermement sur la paroi. Le résultat de ces particularités est un rendement effectif moyen amélioré.

Des particularités de l'invention sont données dans les revendications ci-attachées.

### Etat de la technique antérieur

Le brevet US 4,574,109 (1986) enseigne une composition comprenant un mélange intime de billes de verre de diamètre inférieur à 80µm et d'un matériau finement broyé hydrophobe, tel que par exemple de la silice finement broyée. La composition est apte à être utilisée comme filler pour résine. Les billes de verre peuvent être traitées au moyen d'un silane. Le revêtement ainsi obtenu est un mélange intime de billes de verre et de silice finement broyée.

Le brevet US 4,756,931 (1988) enseigne un revêtement pour un support, ledit revêtement comprenant des billes de verre traitées avec un agent de couplage et un polymère hydrophobe. La couche de revêtement est suffisamment fine pour que les grosses billes de verre forment des protubérances ressortant de la couche de revêtement.

Le brevet US 7,211,329 (2007) a pour objet un produit qui présente une surface extérieure facilement lavable grâce à un revêtement hydrophobe comprenant une matrice d'oxyde de métal (par exemple préparée à partir d'un gel d'oxyde de métal) et une substance hydrophobe (telle qu'un composé silicone, un fluoro silicone, fluoro silane).

La demande US2009/0095021 (2009) décrit une méthode pour former une surface hydrophobe. Selon cette méthode on dépose sur la surface d'un support des particules hydrophobes de granulométrie inférieure à 200nm, les particules étant collées ou soudées au support.

La demande US2010/0004373 (2010) décrit une composition de revêtement super hydrophobe comprenant une composition liante (réticulable) et des conglomérats de particules hydrophobes.

Le brevet EP1249467 (2002) décrit une surface auto nettoyante hydrophobe présentant une structure superficielle synthétique constituée d'élévations et de dépressions, ces élévations et dépressions étant formées par des particules structurelles fixes (silicates, par exemple) avec une structure crevassée à l'échelle nanométrique, et par des particules de fixateur pour la fixation des particules à structure crevassée, ce fixateur contribuant en outre à la formation d'élévations et de dépressions.

Le brevet US 5,415,927 (1995) a pour objet un substrat en verre comportant sur une face une couche enrichie en oxyde de silicium pour élimination en surface su substrat de composés autres que SiO₂, cette couche enrichie en SiO₂ étant munie d'un revêtement hydrophobe, par exemple un fluorosilane.

Le brevet US 5980992 (1999) a pour objet le traitement de surface polymère contenant du silicium au moyen de silane fluoré.

La demande EP0842908 (1997) a pour objet un substrat de verre muni d'un revêtement hydrophobe à base de fluoro silane, avec interposition d'une couche intermédiaire contenant du SiO₂ avec des groupements hydroxyl.

La demande WO99/64363 (1999) décrit une méthode pour améliorer la durabilité d'une couche hydrophobe sur un support en verre, en exposant le support en verre à une abrasion et à une attaque chimique, avant de déposer la couche hydrophobe. Il est d'autre part connu (voir "Self-cleaning effect of highly water-repellent microshell structures for solar cell applications", J. Mater. Chem., 2011, 21, 633-636, Yong-Bum Park et al.) que la seule présence de poussières dans l'air peut réduire de près de 17% le rendement de cellules solaires. Cet article décrit une face superhydrophobe transparente avec une structure cylindrique nano.

De nombreuses sociétés proposent ainsi leur service pour nettoyer les panneaux solaires pour améliorer l'efficacité de ceux-ci. Toutefois, une telle opération de nettoyage n'a qu'un effet limité dans le temps, puisque dès que la surface est nettoyée, de nouvelles salissures se déposent, salissures en particulier feuilles d'arbre qui ne savent que difficilement être enlevées par elles-mêmes, par exemple lors de pluies torrentielles.

L'invention a pour objet un revêtement super hydrophobe particulier, permettant non seulement de réduire la réflectance des éléments collecteurs d'énergie solaire, en particulier d'éléments ou panneaux solaires ou photovoltaïques, mais également pour faciliter l'enlèvement de salissures, feuilles d'arbre, poussières, etc. déjà par une pluie fine, et ce même si l'angle d'inclinaison du panneau ou élément est faible.

Des particularités et détails de l'invention ressortiront de la description détaillée suivante dans laquelle il est fait référence aux dessins ci-annexés.

Dans ces dessins,
- la figure 1 est une vue schématique à grande échelle et en coupe d'une partie d'une paroi de verre dont une face est munie d'une couche primaire, d'une couche externe et d'un revêtement fluoré;
- la figure 2 est une vue schématique à grande échelle et en coupe d'une partie d'une paroi de verre dont les deux faces opposées sont munies d'une couche primaire, d'une couche externe et d'un revêtement fluoré, et
- la figure 3 est une vue schématique en coupe d'un panneau photovoltaïque.

### Description d'exemples de réalisation préférés

Ces exemples sont donnés à titre descriptif uniquement.

### Exemple 1

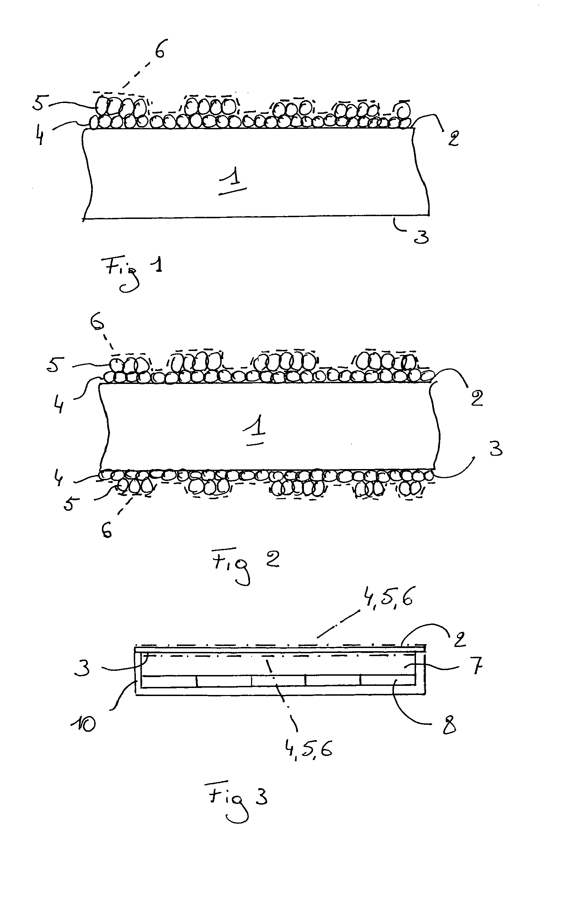

La figure 1 montre schématiquement en coupe une partie d'une feuille de verre 1 d'une épaisseur de 3 à 5mm, par exemple. Cette feuille présente deux faces opposées 2,3.
La face 2 est nettoyée et rincée pour être débarrassée de toute impureté. Cette opération de lavage comprenait une étape de rinçage à l'éthanol, suivi d'une étape de séchage par un courant d'azote.

Un mélange de billes de SiO₂ et de TiO₂ a été préparée. La teneur en billes TiO₂ dans le mélange était de 5% en poids. Ce mélange de billes est mélangé à de l'eau pour former une suspension apte à être appliquée sur la face 2. La granulométrie moyenne en nombre des billes était d'environ 70nm (déterminée par analyse optique). La distribution granulométrique des billes était étroite, le mélange de billes comportant moins de 10% en nombre de billes de plus de 100nm et moins de 10% en nombre de billes de moins de 30nm. L'application de la solution est contrôlée pour que l'épaisseur de la partie solide de la couche déposée soit d'environ 50 à 70nm, c'est-à-dire pour que sensiblement une seule monocouche de billes soit déposée sur la face 2.

La paroi de verre est placée dans un four à environ 500 à 600°C pendant quelques minutes à 6 heures, par exemple de 10 minutes à 3 heures. Après ce traitement les billes de TiO₂ et de SiO₂ adhèrent sur la face 2 de la paroi 1. Une couche primaire (4) est ainsi formée, cette couche primaire adhérant à la paroi de verre.

Une analyse de cette couche primaire a montré qu'elle présentait un facteur de rugosité de Wenzel (Wenzel roughness factor ) compris entre 1,02 et 1,1 mesuré sur une section de 5µm sur 5µm (image AFM). Ce facteur a de plus été déterminé sur d'autres sections de 5µm sur 5µm de la face rugueuse pour en déterminer un facteur moyen de rugosité de Wenzel. Ce facteur moyen (moyenne arithmétique des facteurs de 5 sections) était également compris entre 1,02 et 1,1.
Un examen de mini zones (1 µm sur 1 µm et 0,5µm sur 0,5 µm) ont permis de déterminer des facteurs de rugosité de Wenzel compris entre 1,09 et 1,20.

Un mélange de billes de SiO₂ de granulométrie moyenne optique en nombre d'environ 120nm et de billes de TiO₂ de granulométrie moyenne optique en nombre d'environ 120nm est préparé. Ce mélange comprenant 95% de SiO₂ et 5% de TiO₂ est mis en suspension dans un mélange aqueux comprenant de l'éthanol (alcool éthylique) (environ 50% du volume de la suspension), des stabilisants de suspension, et des agents antimicrobiens. Cette suspension comprend également environ 1 % en poids de silane ( par exemple de formule Si(OC₂H₅)₄). A cette suspension est ensuite ajouté un peu d'acide chlorhydrique, par exemple à raison de 0,5 à 2ml d'acide chlorhydrique concentré à 37% en poids. Le silane ajouté sert de liant des billes entre elles et avec la couche primaire. La quantité de silane utilisée est réduite, de sorte que des sommets et des creux sont formés entre les billes.

Cette suspension est appliquée sur la face 2 de la paroi de verre, pour former sensiblement une monocouche de billes de 120nm (5) sur la couche primaire (4).

La face 2 est séchée à une température comprise entre 80 et 150°C pendant au moins 5 minutes, de préférence au moins 10 minutes.

Après séchage, on trempe la paroi avec la couche de billes de granulométrie moyenne optique en nombre d'environ 120nm dans un bain contenant essentiellement de l'éthanol (dénaturé), environ 2% en poids de silane de formule CF₃-(CF₂)₇-(CH₂)₂Si(OCH₃)₃, et environ 1% en poids d'acide chlorhydrique. Cette solution de silane avait une très faible teneur en eau.

Après élimination de l'excès de solution présent sur la face avec la couche de billes, la couche est lavée à l'eau et/ou à l'alcool, avant d'être séchée avantageusement sous atmosphère inerte, à une température comprise entre 20°C et 160°C, par exemple entre 50°C et 150°C, avantageusement entre 110°C et 150°C. Une couche perfluorée (6) est ainsi formée sur les billes tournées vers l'extérieur.

Les étapes de nettoyage sont avantageusement opérées au moins partiellement en soumettant la face 2 à l'action d'ultrasons.

La couche couvrant la face 2 de la paroi en verre 1 a été analysée pour déterminer sa glissance, au moyen d'un appareil Krüss DSA (Drop Shape Analyser - analyseur de forme de goutte de 50µl) S100.

Les résultats de cette analyse sont les suivants:
angle theta 0 : environ 144°
angle Theta recul : environ 136°
angle Theta avancé : environ 152°
angle de glissance : environ 5,6° (une goutte d'eau glisse dès que la pente est supérieure à 5,6° par rapport au plan horizontal).

La couche recouvrant la face 2 est aussi transparente pour des rayons de longueur d'onde inférieure à 500nm par rapport à des parois de verre traditionnelles pour bâtiments, pour panneaux photovoltaïques actuellement commercialisés), et présente un caractère plus transparent pour des rayons de longueur d'onde supérieure à 500nm, en particulier pour le jaune (environ 600nm de longueur d'onde).

La couche avait une bonne résistance mécanique, en particulier quant à son écrasement, à son décollement. Elle avait également une bonne résistance chimique, ce même pour des pH acides, par exemple à des pH de 4 ou moins de 4, par exemple à des pluies acides. Même après avoir été salie avec de l'huile d'olive et lavée à l'éthanol, la couche était toujours superhydrophobe.

Un examen visuel par AFM (Atomic Force Microscopy) a permis de visualiser tridimensionellement la couche avec des résolutions verticales de l'ordre de 0,1 nm a permis de bien visualiser que les billes de 120nm étaient disposées sur une couche de billes de 70nm. Ainsi qu'il ressort de cet examen visuel, les billes de 120nm ne forme pas une couche recouvrant de manière continue la couche de particules de 70nm. Ainsi si la couche primaire prenant appui directement sur la face 2 forme une couche continue, les billes de 120nm forment une couche présentant des discontinuités ou des puits, de sorte que ces billes de 120nm forment des protubérances sur la couche primaire.
Le fluorosilane forme alors un revêtement sur les billes de 120nm, ainsi que sur les billes de 70nm non recouvertes par les billes de 120nm.

### Exemples 2 à 10

On a répété l'exemple décrit ci-avant, si ce n'est qu'on a utilisé d'autres mélanges de billes pour la couche primaire et/ou pour la couche extérieure.

Le tableau suivant reprend les nanoparticules utilisées pour la couche primaire et pour la couche extérieure. La granulométrie indiquée entre parenthèse est la granulométrie moyenne optique en nombre. En cas de mélange de particules, le pourcentage indiqué est un pourcentage en poids. Les nanoparticules utilisées avaient toutes une distribution serrée.

| Exemple | couche primaire | couche extérieure |
|---|---|---|
| 2 | SiO₂ (70nm) | SiO₂ (100nm) |
| 3 | SiO₂ (50nm, 90%) | SiO₂ (120nm, 90%) |
| | TiO₂ (50nm, 10%) | TiO₂ (120nm, 10%) |
| 4 | SiO₂ (50nm, 95%) | SiO₂ (100nm) |
| | TiO₂ (50nm, 5%) | |
| 5 | SiO₂ (100nm, 99%) | SiO₂ (150mn) |
| | TiO₂ (100nm, 1%) | |
| 6 | SiO₂ (100nm, 99%) | SiO₂ (150nm, 99%) |
| | TiO₂ (100nm, 1%) | TiO₂ (150nm, 1%) |
| 7 | SiO₂ (100nm) | SiO₂ (150nm) |
| 8 | SiO₂ (70nm, 97%) | SiO₂ (100nm) |
| | TiO₂ (70nm, 3%) | |
| 9 | SiO2 (70nm, 97%) | SiO₂ (100nm, 99%) |
| | TiO₂ (70nm, 3%) | TiO₂ (100nm, 1 %) |
| 10 | SiO₂ (70nm, 95%) | SiO₂ (100nm, 95%) |
| | TiO₂ (70nm, 5%) | TiO₂ (100nm, 5%) |

Le revêtement extérieur ainsi obtenu dans ces exemples avait des propriétés similaires à celles du revêtement de l'exemple 1.

### Exemples 11 à 20

Les exemples 1 à 10 ont été répétés, si ce n'est que les particules de la couche primaire ont été mélangées à de l'eau et de l'éthanol pour former une suspension. Cette suspension comprend de l'éthanol (environ 50% du volume de la suspension), des stabilisants de suspension, des agents antimicrobiens, ainsi qu'environ 1 % en poids de silane ou silicate ( par exemple de formule Si(OC₂H₅)₄). A cette suspension est ensuite ajouté un peu d'acide chlorhydrique, par exemple à raison de 0,5 à 2ml d'acide chlorhydrique concentré à 37% en poids. Le silane ajouté sert de liant des billes de la couche primaire entre elles et avec la feuille de verre. La quantité de silane utilisée est réduite, de sorte que des sommets et des creux sont formés entre les billes.

Le revêtement extérieur ainsi obtenu dans ces exemples avait des propriétés similaires à celles du revêtement de l'exemple 1.

### Exemples 21 à 40

Les exemples 1 à 20 sont répétés, si ce n'est que la face 2, avant d'être munie de la couche primaire, la face 2 est traitée avec de l'acide HF concentré.

Le revêtement extérieur ainsi obtenu dans ces exemples avait des propriétés similaires à celles du revêtement de l'exemple 1. Il semble donc que le prétraitement avec de l'acide HF n'apporte aucun avantage supplémentaire, sauf éventuellement en ce qui concerne l'accrochage de la couche primaire.

Les exemples 1 à 40 ont été répétés, si ce n'est qu'on a utilisé d'autres composés perfluorés que le composé : CF₃-(CF₂)₇-(CH₂)₂Si(OCH₃)₃, à savoir :

CF₃-(CF₂)₇-(CH₂)₂SiCl₃

le perfluorodecyltrichlorosilane;

CF₃-(CF₂)₅-(CH₂)₂Si(OCH₃)₃

CF₃-(CF₂)₉-(CH₂)₂Si(OCH₃)₃

CF₃-(CF₂)₅-(CH₂)₂SiCl₃

CF₃-(CF₂)₉-(CH₂)₂SiCl₃

des mélanges de ceux-ci entre eux ou avec CF₃-(CF₂)₇-(CH₂)₂Si(OCH₃)₃

D'autres exemples de composés perfluorés sont :
trifluoroacetoxypropyl tri-(C1-C2)alkoxysilanes,
3-(heptafluoroisopropoxy)propyltrichlorosilane,
3-(heptafluoroisopropoxy)propyltriethoxysilane,
N-(3-triethoxysilylpropyl)perfluorooctanoamide,
N-(3-triethoxysilylpropyl)perfluoro(2,5-dimethyl-3,6-dioxanonanoyl)amide,
(tridecafluoro-1,1,2,2-tetrahydrooctyl)-1-dimethyl chloro silane,
(tridecafluoro-1,1,2,2-tetrahydrooctyl)-1methyldichlorosilane,
(tridecafluoro-1,1,2,2-tetrahydrooctyl)-1-trichloro sil ane,
tridecafluoro-1,1,2,2-tetrahydrooctyl-1 -triethoxysilane,
3,3,3-trifluoropropyldimethylchlorosilane,
(3,3,3-trifluoropropyl)methydichlorosilane,
(3,3,3-trifluoropropyl)methyldimethoxysilane,
(3,3,3trifluoropropyl)methyldimethoxysilane,
(3,3,3-trifluoropropyl)trichlorosilane,
(3,3,3-trifluoropropyl)trimethoxysilane,
1H,H,2H,2H-perfluoroalkyltriethoxysilane,
1H,H,2H,2H-perfluorodecyldimethylchlorosilane,
1H,H,2H,2H-perfluorodecylmethyldichlorosilane,
1H,1H,2H,2H-perfluorotrichlorosilane,
1H,1H,2H,2H-perfluorotriethoxysilane,
1H,1H,2H,2Hperfluorooctylmethyldichlorosilane,
1H,1H,2H,2H perfluorooctylethyltrichlorosilane,
perfluorodecyltrichlorosilane,
1H,1H,2H,2H-perfluorooctyltrichlorosilane,
1H,1H,2H,2H-perfluorooctyltriethoxysilane, et
leurs mélanges.

La figure 2 est une représentation schématique d'une paroi de verre 1 munie sur chacune de ses faces opposées (2,3) d'une couche continue primaire (4), d'une couche discontinue de grosses particules (5), et un revêtement fluoré recouvrant les grosses particules (5), ainsi que les parties de la couche primaire non recouvertes par des grosses particules. Les couches et revêtements d'une face (2) peuvent identiques ou différents des couches et revêtements de l'autre face (3). Ces couches et revêtements sont par exemple des couches et/ou revêtements tels que décrits dans les exemples décrits ci-avant.

Selon une variante possible de la forme de réalisation selon la figure 2, une première face de la paroi en verre, par exemple la face adaptée à être tournée vers l'extérieur, est munie d'une couche continue primaire (4), d'une couche discontinue de grosses particules (5), et un revêtement fluoré recouvrant les grosses particules (5), ainsi que les parties de la couche primaire non recouvertes par des grosses particules, tandis que l'autre face opposée à la première face n'est pas munie de revêtement comprenant une couche continue primaire (4), d'une couche discontinue de grosses particules (5), et un revêtement fluoré recouvrant les grosses particules (5). Par exemple ladite autre face est munie d'aucun revêtement, ou d'un simple revêtement hydrophobe, par exemple fluoré, ou d'une seule couche continue primaire (4) avec ou sans revêtement hydrophobe, ou d'une seule couche continue ou non de grosses particules (5) avec ou sans revêtement hydrophobe, ou d'une couche continue primaire (4), d'une couche discontinue de grosses particules (5).

La figure 3 est une vue schématique d'un panneau avec des cellules photovoltaïques comportant une paroi de protection transparente, du type représenté à la figure 2.

Ce panneau comporte une structure 10 définissant une cuvette 7 recevant les cellules photovoltaïques 8, l'ouverture supérieure de la cuvette est fermée par une paroi 1 dont les deux faces opposées 2,3 sont munies d'une mono couche interne, d'une couche externe et du revêtement fluoré.

Des tests ont été opérés avec des panneaux selon l'invention inclinés à 30°, on a remarqué que les gouttes d'eau tombant sur la paroi de verre avaient un rebond beaucoup plus important que pour les panneaux comparatifs suivants :
- panneau dont la face extérieure est recouverte directement par une couche fluor polysiloxane ;
- panneau dont la face extérieure est recouverte d'une mono couche de billes de SiO₂ de diamètre moyen optique en nombre de 10nm, et d'un revêtement extérieur fluoro polysiloxane ;
- panneau dont la face extérieure est recouverte d'une mono couche de billes de SiO₂ de diamètre moyen optique en nombre de 20nm, et d'un revêtement extérieur fluoro polysiloxane ;
- panneau dont la face extérieure est recouverte d'une mono couche continue de billes de SiO₂ de diamètre moyen optique en nombre de 100nm, avec un revêtement extérieur fluoro polysiloxane ;
- panneau dont la face extérieure est recouverte d'une première mono couche continue de billes de SiO₂ de diamètre moyen optique en nombre de 100nm, sur laquelle est déposée des billes de SiO₂ de diamètre moyen optique en nombre de 10nm, avec un revêtement extérieur fluoro polysiloxane .

L'excellent rebond des gouttes d'eau sur la paroi selon l'invention permet d'assurer un décrassement aisé ou élimination aisée de crasses par la pluie, permettant ainsi d'assurer un meilleur rendement photovoltaïque ou moins de pertes de production d'énergie.

Ces tests ont ainsi montré que les poussières, déchets végétaux, feuilles, etc. étaient plus facilement éliminés sur la paroi selon l'invention, en particulier avec des angles d'inclinaison de la paroi inférieurs à 10°.

Des tests d'utilisation ont également été effectués. Dans ces tests on a disposé des éléments ou panneaux photovoltaïques côte à côte, et on a mesuré pour chaque élément ou panneau la quantité d'énergie électrique produite sur une période de deux mois. On a démontré ainsi que le panneau photovoltaïque selon l'invention avait produit une quantité d'électricité plus importante et de manière plus constante que tous les autres panneaux comparatifs. Un examen visuel des panneaux a également montré que la paroi extérieure du panneau selon l'invention avait un aspect plus propre par rapport aux parois des panneaux comparatifs.

Le panneau photovoltaïque suivant l'invention demande donc moins d'entretien pour assurer une production efficace et régulière d'énergie électrique, par rapport à l'entretien requis pour les panneaux photovoltaïques comparatifs.

Le support peut être du type rigide, mais également du type flexible ou articulé.

Le support est avantageusement un support transparent ou translucide, ce support pouvant être une paroi vitrée. Le support peut également être un élément avantageusement transparent ou translucide muni d'une précouche d'accrochage contenant du silicium, cette précouche pouvant le cas échéant être une couche primaire telle que revendiquée dans l'une quelconque des revendications.

Dans les exemples de réalisation, les billes de silice sont reliées entre elles par un liant du type silane ou apte à créer des liens

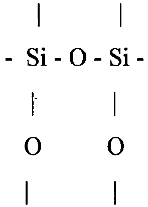

Il est évident que d'autres liants sont possibles, s'ils sont aptes à assurer un bon accrochage des billes avec le support et s'ils sont aptes à assurer au moins une certaine transparence de la couche de billes (primaire et/ou extérieure)

## Revendications

1. Support contenant du silicium, ledit support présentant au moins une face extérieure traitée avec un composé silane et/ou siloxane avec un groupe organique hydrophobe, avantageusement un composé fluorosilane et/ou fluorosiloxane, pour former un revêtement extérieur fluoré hydrophobe, avec interposition éventuelle d'une ou plusieurs couches intermédiaires et/ou primaires, caractérisé en ce la face extérieure est une couche extérieure superhydrophobe formée sensiblement par une mono couche de billes (avantageusement sensiblement sphériques) traitées au moins partiellement par un composé silane et/ou siloxane avec un groupe organique hydrophobe, avantageusement un composé fluorosilane et/ou fluorosiloxane, ladite couche extérieure présentant une teneur d'au moins 50% en poids, avantageusement d'au moins 75% en poids, spécifiquement de plus de 90% en poids, de préférence plus de 95% en poids, voire plus particulièrement plus de 99% en poids d'oxyde de silicium, les billes de ladite couche présentant en outre les caractéristiques suivantes :
- granulométrie moyenne optique en nombre ou diamètre moyen optique en nombre comprise entre 70nm et 300nm,
- teneur optique en particules de taille inférieure à 20nm de moins de 20% en nombre par rapport au nombre total des particules de la monocouche visibles sur sa face opposée à celle tournée vers le support,
- billes sont reliées entre elles par un liant adapté pour accrocher les billes à la face du support ou à une couche primaire du support, ledit liant étant en outre adapté pour former et/ou conserver un réseau de pores et/ou de crevasses entre les billes,
et en ce que ladite couche extérieure est déposée sur une couche du support ou sur une couche primaire choisie parmi :
(a) une couche primaire présentant un facteur de rugosité de Wenzel mesuré par image AFM (Atomic Force Microscopy) de taille de 5µm sur 5µm compris entre 1,02 et 1,1, avantageusement entre 1,03 et 1,07, et
(b) une mono couche interne de billes présentant une teneur d'au moins 50% en poids, avantageusement d'au moins 75% en poids, spécifiquement de plus de 90% en poids, de préférence plus de 95% en poids, voire plus particulièrement plus de 99% en poids d'oxyde de silicium, les billes de ladite couche interne présentant en outre les caractéristiques suivantes :
- une granulométrie moyenne optique en nombre supérieure à 30nm, mais d'au moins 10nm inférieure à la granulométrie moyenne optique en nombre des billes de la couche extérieure, ladite mono couche interne présentant une teneur en particules de taille inférieure à 20nm de moins de 20%, avantageusement de moins de 10% en nombre par rapport au nombre total des particules de la mono couche interne.

2. Support suivant la revendication 1, **caractérisé en ce que** la couche extérieure présente un facteur de rugosité de Wenzel (Wenzel roughness factor ) supérieur à 1,1, mesuré par image AFM (Atomic Force Microscopy) de taille de 5µm sur 5µm.

3. Support suivant la revendication 1 ou 2, **caractérisé en ce que** plus de 95% en poids des billes de la mono couche interne de billes sont des billes présentant une granulométrie moyenne optique en nombre comprise entre 50nm et 100nm, en particulier comprise entre 60nm et 80nm.

4. Support suivant la revendication 3, **caractérisé en ce que** plus de 95% en nombre des billes de la mono couche interne de billes sont des billes présentant une teneur d'au moins 95% en poids d'oxyde de silicium et ayant une granulométrie moyenne optique en nombre comprise entre 50nm et 100nm, en particulier comprise entre 60nm et 80nm.

5. Support suivant lune quelconque des revendications 1 à 4, **caractérisé en ce que** plus de 95% en nombre des billes de la mono couche extérieure sont des billes présentant une teneur d'au moins 95% en poids d'oxyde de silicium et ayant une granulométrie moyenne optique en nombre comprise entre 70nm et 200nm, en particulier comprise entre 80nm et 150nm.

6. Support suivant l'une quelconque des revendications précédentes, **caractérisé en ce que** la mono couche interne ou la couche primaire forme sur la face 2 du support une couche sensiblement continue de billes présentant une teneur d'au moins 90% en poids d'oxyde de silicium , et une granulométrie moyenne optique en nombre supérieure à 30nm, mais d'au moins 10nm inférieure à la granulométrie moyenne en nombre des billes de la couche extérieure, tandis que les billes de la couche externe forme une couche présentant des discontinuités ou des puits ou des crevasses, de sorte que des parties de la mono couche interne ne sont pas recouvertes par des billes de la couche externe, et **en ce que** le revêtement silane et/ou siloxane avec groupe hydrophobe, en particulier fluorosilane et/ou fluorosiloxane, recouvre la couche discontinue extérieure, ainsi que les parties de la mono couche interne ou couche primaire non recouverte par des billes de la couche extérieure.

7. Support suivant l'une quelconque des revendications 1 à 6, **caractérisé en ce que** le revêtement extérieur fluoré des billes est un revêtement polysiloxane fluoré pour lequel sensiblement chaque atome de silicium du revêtement est associé à un groupe aliphatique fluoré comprenant de 4 à 12 atomes de carbone et au moins 7 atomes de Fluor, dont au moins trois à l'extrémité libre du groupe aliphatique.

8. Support suivant la revendication précédente, **caractérisé en ce que** le groupe aliphatique fluoré comprend de 6 à 10 atomes de carbone et au moins 10, avantageusement au moins 12 atomes de fluor.

9. Support suivant la revendication 7 ou 8, **caractérisé en ce que** le revêtement extérieur fluoré est sensiblement une monocouche d'épaisseur sensiblement égale à la longueur de l'association atome de silicium avec le groupe aliphatique fluoré.

10. Support suivant l'une quelconque des revendications précédentes, **caractérisé en ce que** les billes de la couche externe et/ou de la mono couche interne sont un mélange de billes de SiO₂ et de billes de TiO₂, le rapport en poids billes de TiO₂ / billes de SiO₂ étant avantageusement compris entre 0,005 et 0,1, de préférence entre 0,005 et 0,05, en particulier entre 0,005 et 0,01.

11. Support suivant l'une quelconque des revendications précédentes, ledit support étant une paroi de verre, en particulier une paroi de verre pour panneau solaire, ladite paroi présentant sur ses deux faces opposées un revêtement extérieur fluoré hydrophobe, avec interposition éventuelle d'une ou plusieurs couches intermédiaires et/ou primaires, présentant une ou des particularités mentionnées dans une ou des revendications précédentes.

12. Elément pour collecter l'énergie solaire, en particulier panneau solaire, plus spécifiquement élément et panneau photovoltaïque, comprenant une paroi de verre selon la revendication précédente.

13. Utilisation d'un panneau photovoltaïque selon la revendication précédente.
